# EUROPEAN PATENT SPECIFICATION

(11) **EP 0 689 525 B1**
(45) Date of publication and mention of the grant of the patent: **21.01.1998**
(21) Application number: 93907559.4
(22) Date of filing: 18.03.1993
(51) Int. Cl.: C04B 35/52, C04B 35/58, C22C 29/02, C22C 29/14, C22C 29/16, C22C 29/18

(54) **COMPLEX MULTI-PHASE REACTION SINTERED HARD AND WEAR RESISTANT MATERIALS**
KOMPLEXES MEHRPHASIGES REAKTIONSGESINTERTES HARTES UND VERSCHLEISSFESTES MATERIAL
MATERIAUX DURS RESISTANTS A L'USURE, FRITTES, PRODUITS PAR REACTION COMPLEXE MULTIPHASE

(43) Date of publication of application: 03.01.1996
(73) Proprietor: THE DOW CHEMICAL COMPANY, Midland, Michigan 48674 (US)
(72) Inventor: DUBENSKY, Ellen, M., Midland, MI 48642 (US); TIMM, Edward, E., Freeland, MI 48623 (US); GULAU, Ann, M., Midland, MI 48640 (US); BOARD, Julie, L., Lansing, Michigan 48912, (US)
(74) Representative: Burford, Anthony Frederick
(86) International application number: US9302443
(87) International publication number: WO9421574

(56) References cited:
- EP-A- 0 189 677
- EP-A- 0 311 044
- EP-A- 0 385 509
- EP-A- 0 477 685
- EP-A- 0 480 636
- EP-A- 0 559 901
- FR-A- 2 447 977
- GB-A- 504 522
- GB-A- 866 119
- US-A- 2 196 009
- US-A- 2 814 566
- US-A- 4 945 073

## Description

This invention generally concerns a product prepared from an incomplete reaction of a mixture of a boron, carbon, nitrogen or silicon derivative of a first metal, a different boron, carbon, nitrogen or silicon derivative of a second metal, and, optionally, boron, carbon, nitrogen or silicon. This invention also concerns a process for preparing such products. This invention further concerns wear resistant articles formed from such materials.

Tungsten carbide cemented with cobalt is a material of widely known utility for use in cutting tools and in other applications requiring high hardness. For example, tungsten carbide/cobalt is used in abrasive waterjet cutting nozzles. Unfortunately, cobalt is a strategic material. As such, its price and availability can be subject to political factors. These considerations, among others, provide a basis for many long standing programs aimed at finding replacements for tungsten carbide/cobalt.

It would be desirable to have one or more nonstrategic materials which would provide improvements in terms of hardness over tungsten carbide/cobalt, but at a lower cost than diamond. It would also be desirable to have a process which allowed production of complex, near net shapes which cannot be made by casting molten carbides or by hot pressing.

EP-A-0189677 discloses the manufacture of ceramic materials by sintering a mixture of 1 - 90 wt % chromium carbide, optionally 0.1 - 5 wt% B₄C, optionally less than 95 wt% of one or more specified metal boride, and the balance titanium carbonitride in which the mol ratio of carbon to nitrogen is 1:9 - 9:1. The specified metal borides include TiB₂, CrB₂, TaB₂, MoB₂, VB₂, NbB₂, HfB₂, ZrB₂, TiB, CrB, TaB, VB, NbB, HfB, ZrB, W₂B₅ and Mo₂B₅. Examples 23 - 30 & 33 sinter mixtures containing Cr₃C_{2,} titanium carbonitride and TiB₂ and Examples 42 - 46 sinter mixtures additionally containing B₄C.

US-A-4,945,073 (corresponding to EP-A-0360567 discloses the incomplete reaction between one or more borides, carbides, nitrides or silicides of a first Group 4-6 metal (AX), a source of a second, different, Group 4-6 metal (B_{source}) and, optionally, the non-metallic element (X) of said first metal compound. The Group 4-6 metals are chromium, hafnium, molybdenum, niobium, tantalum, titanium, tungsten, vanadium and zirconium. One or more metals of the iron group (ie iron, cobalt or nickel) can be added as auxiliary or binding metals and cobalt can be present from tungsten carbide-cobalt balls used for attrition. B_{source} can be a boride, carbide, nitride or silicide but it is stated to be desirable that such a derivative is chemically consistent with AX (ie the derivative is BX). All the exemplified derivatives of B are BX.

EP-A-0385509 discloses the manufacture of ceramic composites by sintering a mixture of (a) at least one of diboride, carbide or nitride of hafnium or zirconium and (b) titanium carbide, nitride or dioxide to cause a substitution reaction resulting in a product which substantially comprises compounds other than (a) or (b). Some mixtures of (a) and (b), including ZrC/TiC; HfC/TiC; HfN/TiN and ZrN/TiN, are not reactive and hence are excluded. It is stated that equimolar mixture are theoretically desirable but that the range 0.2 to 2.0 moles (b) per mole (a) can be used. Additional components can be present in the mixture to modify the properties of the product. Specified additional components include Si, WC, TiC, ZrC, HfC, TaC, NbC, TiN, ZrN, HfN, TaN, WB, TiB₂, and HfB₂. There are no exemplified mixtures containing a boride, carbide, nitride or silicide of a Group 4-6 other than hafnium, titanium and zirconium.

EP-A-0477685 discloses cermets having a hard phase comprising (1) at least one carbide, nitride or carbonitride of a Group 4-6 metal (MC, MB or MCN) and (2) a tungsten-cobalt mixed boride (W-Co-B), and a bonding phase comprising cobalt. Preferably, the hard phase further comprises (3) at least one compound selected from (M,W) (B,C), (M,W) (B,N) and (M,W,) (B,C,N). The cermet is formed by partial reaction of a reactant mixture containing WB, Co and at least one MC, MB or MCN. The reaction mixture is required to contain 10 to 45 vol% WB and 5 to 20 vol% Co. The upper limit of WB is because uniform sintering is difficult when the WB content exceeds 45 vol%. The lower Co limit is because strength and plasticity is reduced if Co is less than 5 vol%.

In Examples 3 and 4 of EP-A-0477685, the reactant mixtures contain WB, TiC and Co; in the first run of Example 5, the reaction mixture contains WB, TaC and Co; in the second run of Example 5, the reaction mixture contains WB, NbC and Co; in the last run of Example 5, the reaction mixture contains WB, TiN and Co; and in the penultimate run of Example 5, the reactant mixture contains WB, TiCN and Co.

One aspect of the present invention is a material suitable for use in fabricating articles of manufacture requiring high degrees of hardness or wear resistance that comprises a substantially fully dense, complex, multiphase, fine grained product of an incomplete reaction among components of a powdered admixture of AX, an optional amount of X and at least one other reactant BY, AX and the other reactant(s) each having a melting point, the incomplete reaction taking place under pressure and at an elevated temperature that is less than three fourths of the lowest of the melting points of AX and the other reactant(s), said product having minimal grain growth and containing at least one compound AX and at least one compound that is a product of varying stoichiometry selected from (A,B)XY, (A,B)X and (A,B)Y, wherein A and B are different elements selected from titanium, vanadium, niobium, tantalum, chromium, molybdenum and tungsten, and X and Y are different elements selected from boron, carbon, silicon and nitrogen, provided that (i) titanium is not present as titanium carbonitride and (ii) no cobalt, iron or nickel is present other than any trace amounts from attritor or milling media.

It is preferred that A is tungsten or titanium, B is titanium or tantalum, X is carbon and Y is nitrogen and that BY is present in an amount of from 1 to 50 percent by weight based on the total weight of AX and BY. The reaction product can contain a residual amount of unreacted BY and suitably has a hardness at 1200°C of greater than 5 gigapascals.

A second aspect of the present invention is a method of preparing a material suitable for use in fabricating articles of manufacture requiring high degrees of hardness or wear resistance that comprises subjecting a powdered admixture of AX, an optional amount of X and at least one other reactant BY, AX and the other reactant(s) each having a melting point, to a temperature that is less than three fourths of the lowest of the melting points of AX and the other reactant(s) and a pressure sufficient to produce a substantially fully dense, consolidated product of an incomplete reaction between AX, the other reactant(s) and, optionally, X, said product having minimal grain growth and comprising at least one compound AX and at least one compound that is a product of varying stoichiometry selected from (A,B)XY, (A,B)X and (A,B)Y, wherein A and B are different elements selected from titanium, vanadium, niobium, tantalum, chromium, molybdenum and tungsten, and X and Y are different elements selected from boron, carbon, silicon and nitrogen, provided that (i) titanium is not present as titanium carbonitride and (ii) no cobalt, iron or nickel is present other than any trace amounts from attritor or milling media. The comments following the first aspect also apply to the second aspect.

It is believed that temperatures in excess of three fourths of the lowest melting point lead to excessive grain growth and drive the reaction toward a complete reaction of AX with the other reactant(s). These results are believed to be undesirable. The consolidated product suitably has a Vickers hardness of at least 1900 kg/mm² measured using a 1kg load. Preferably, the product has a said Vickers hardness of at least 2000 kg/mm² and an abrasion wear resistance (ASTM G65) of at least 400 cm⁻³. The Vickers hardness is beneficially at least 2200 kg/mm².

The process may further comprise one or more preliminary steps such as forming the powdered admixture of AX and the other reactant(s), and converting the admixture into a shaped greenware article. The process may also comprise one or more finishing steps subsequent to densification.

The materials of the first aspect may be used to form wear resistant articles. Suitable wear resistant articles include: nozzles such as waterjet cutting nozzles or mixing tubes, abrasive blast nozzles, water blast nozzles, spray dry nozzles, and paint spray nozzles; orifices such as choke valves and flow meter parts; bushings; pump and valve parts; tiles, sleeves, chutes, tubes and other parts used in handling abrasive materials such as coal or mineral slurries; cutting tools such as indexable inserts, end mills, router bits, reamers, drills, saw blades, and knives used, where appropriate, for machining or cutting materials such as metals, plastics, wood products and composites; dies, capstans, rollers, guides, punches, forming tools and other tools used for wire drawing, tube drawing, extrusion, molding, textile manufacturing and other operations requiring hardness or wear resistance; powder compacting dies; EDM current contacts and guides; sporting equipment; and precision parts for timepieces, computers, guns, and gyroscopes. This listing of suitable applications is solely for purposes of illustration and is not intended to be a definitive listing of all potential applications. Other uses should be readily apparent without undue experimentation.

The present invention employs a material AX wherein A is selected from titanium, vanadium, niobium, tantalum, chromium, molybdenum and tungsten and X is selected from boron, carbon, silicon and nitrogen. A is beneficially titanium or, preferably, tungsten. X is beneficially carbon, silicon or nitrogen, desirably carbon. As such, tungsten carbide (WC) is a preferred, commercially available material. The WC has an average grain size which is suitably ten µm or less, beneficially five µm or less, desirably one µm or less and preferably from 0.4 to 0.8 µm. The grain size is desirably as fine as possible. Such a size is not always commercially available. As such, the commercially available powders may have to be used as is or, if possible, reduced in size by attrition or another suitable process. Acceptable grain sizes for other materials of the formula AX approximate those for tungsten carbide and are readily determined without undue experimentation. The material AX is preferably in powder or particulate form.

Although cobalt is not an added component, inadvertent addition of trace amounts is believed to be unavoidable if milling or attritor media used to form powdered mixtures contain an amount of cobalt. Cobalt, in particular, aids in forming mixed carbides which may lower densification temperatures to 1400°C or lower, depending upon the composition. However, cobalt is not believed to be essential for complete densification. One need only use higher temperatures in the absence of cobalt to approach or achieve complete densification.

The present invention also employs BY. B, like A, is selected from titanium, vanadium, niobium, tantalum, chromium, molybdenum and tungsten. B is not, however, the same as A. In other words, when A is tungsten, B may be any of the aforementioned materials other than tungsten. BY is preferably in powder or particulate form.

Y differs from X, but is selected from the same group as X. By way of illustration, when X is carbon and Y is nitrogen the incomplete reaction product may be a carbonitride such as (W,Mo)CN.

The process of the present invention suitably comprises subjecting a powdered admixture of reactants to densification conditions sufficient to produce a consolidated product of an incomplete reaction between or among the reactants. The product comprises at least one compound AX and at least one compound of varying stoichiometry generically represented as (A,B)X, (A,B)Y, or (A,B)XY. The variables A, B, X and Y are as defined herein. The densification conditions are selected to minimize grain growth and include a temperature which is less than three fourths of the lesser of the melting points of AX and the remaining components of the admixture, but greater than a temperature at which no appreciable consolidation occurs. The conditions also include a pressure sufficient to achieve a desirable degree of densification. The reaction product is preferably substantially fully dense.

As used herein, the terms "incomplete reaction", "incomplete reaction product" and "product(s) of an incomplete reaction" all refer to the reaction of AX with the other components of the powdered admixture wherein at least a portion of AX does not react with said other components. As a consequence, that portion is admixed with the incomplete reaction product(s) (compound(s) of varying stoichiometry) and, optionally, a small amount of the other components in products prepared in accordance with various aspects of the present invention.

The resultant densified materials can provide Vickers hardness values as low as 1000 kg/mm². The wear resistance of a 1000 kg/mm² Vickers hardness material should, however, be much lower than that of a 2400 kg/mm² Vickers hardness material. Because of chemical compatibility or other reasons, the lower hardness materials may, however, still show exceptional utility in certain applications.

The powdered admixture may be prepared by any one of a number of conventional mixing processes so long as a generally uniform admixture is obtained and no adverse effects upon physical properties of the resultant material are observed. The use of an attritor, wherein balls of hard material are used to facilitate mixing, provides particularly satisfactory results even if small portions of the balls, typically formed from a tungsten carbide/cobalt material, are abraded therefrom during mixing and added to the admixture. The presence of a minor amount of cobalt in reaction products or final materials does not adversely affect the physical properties of the densified material. However, the balls can be formed from the same material as that being mixed.

The starting materials, AX, BY, and, optionally an amount of X, are beneficially in particulate or powder form before they are converted to an admixture. It is believed that small particles offer more advantages than large particles, at least in terms of hardness, wear and residual unreacted starting materials. Small particles, as a general rule, also require less mixing time than large particles. As such, the powders desirably have an average particle size of less than 2 µm. Based upon factors such as availability, larger particle sizes may have to be used as received or, if necessary, subjected to size reduction operations before use.

Mixing of the powders in an attritor is beneficially accomplished with the aid of a liquid such as heptane. In order to facilitate greenware formation subsequent to mixing, a binder such as paraffin wax can be added during the final stages of attrition. Desirably, the attrited mixture is dried before further processing. Particularly satisfactory results are obtained by screening or classifying the attrited and dried mixture to remove unwanted agglomerates and fines.

The process of the present invention may also comprise a second preliminary step wherein the attrited, dried and classified mixture is converted to a preform. Preforms can be prepared using technology known in the powder metals or ceramics industries. US-A-4,446,100 and Modern Ceramic Engineering, Chapter 6, pages 178-215 (1982) describe such technology.

A typical procedure for converting a particulate material, which can contain one or more of reinforcements, fillers, densification aids, binders, lubricants, dispersants and flocculants, into a preform begins by forming or shaping the powder into a desired configuration using uniaxial pressing, isostatic pressing, slip casting, extrusion, injection molding or any similar technology. The resulting article is then prepared for densification by, for example, thermal or chemical debindering, presintering, green machining, or re-isopressing. A protective coating can be applied to the resulting article to prevent reaction with the environment. In extreme cases, the article can be "canned", or placed in an impervious container, to permit handling without atmospheric contamination. The resulting article, as prepared for densification, is referred to herein as "greenware".

The greenware is subjected to pressure assisted densification using one of several techniques known to those skilled in the art whereby the greenware is desirably subjected to pressure at elevated temperatures to produce a desired article. These techniques include hot pressing, hot isostatic pressing (HIP'ing) and rapid omnidirectional compaction (ROC). Although any of these techniques may be used with varying degrees of success, particularly suitable results are obtained by the ROC technique which employs mechanically induced pressure, e.g., that generated by using a forging press, as a means of densifying greenware.

A desirable method of converting the greenware into a satisfactory densified article is described in US-A-4,744,943 at column 5, line 13 through column 6, line 33 and column 7, line 21 through column 10, line 40. When such a method is employed, the pressure is suitably applied for a period of time of less than one hour. The period of time is preferably less than 30 minutes, desirably less than one minute and preferably less than 30 seconds. In order to facilitate recovery of resultant densified parts, the greenware is beneficially wrapped in graphite foil or some other substantially inert material prior to being placed in a glass pocket fluid die or other densification medium.

US-A-4,081,272 discloses a glass-encapsulated HIP process. US-A-3,622,313 discloses a HIP process. If the glass-encapsulated process is used, a desirable modification includes evacuating the glass capsule containing a part to be densified and eliminating the use of powdered glass. Application of pressure suitably occurs over a period of one hour or less.

The densified article prepared in the manner described hereinabove is a complex, multi-phase, fine-grained composite containing, as principal components, at least one compound of varying stoichiometry and at least one compound AX. The compound of varying stoichiometry will have a composition which reflects the choice of reactants. In other words, it will be represented as (A,B)XY, (A,B)X, (A,B)Y or mixtures thereof.

The densified article exhibits surprisingly improved hardness and wear resistance in comparison to a like article formed from tungsten carbide/cobalt. The Vickers hardness of an article representative of the present invention is suitably at least 2200 kg/mm² measured using a 1 kg load. The Vickers hardness is beneficially at least 2300 kg/mm², and desirably at least 2400 kg/mm². As noted hereinabove, lower Vickers hardness values on the order of 1900 kg/mm² or even lower may be acceptable for some applications. Also as noted hereinabove, those hardness values are readily attainable with the process of the present invention. Skilled artisans will recognize that hardness and wear resistance vary depending upon the materials represented by A, B, X and Y. Skilled artisans will recognize that wear resistance is proportional to hardness and that softer materials may provide an abrasion wear resistance below 500 cm⁻³. These materials may be suitable in extreme temperatures or in chemically aggressive environments.

The densified article suitably has a fine-grained structure with an average grain size of less than 10 µm. The grain size is beneficially less than five µm and desirably less than one µm.

The articles of this invention generally have a density of 85 % of theoretical density or greater. The density is beneficially more than 90 %, desirably more than 95 % and preferably about 100 % of theoretical density. "Theoretical density", as used herein, is a calculated value based upon volume fraction and density of the starting components. "High density", as used herein, refers to a density of at least 90 % of theoretical density. Another measure of adequate densification is porosity of the articles of this invention. The porosity is suitably minimized to attain optimum hardness. As such, the porosity is beneficially less than 5 % percent by volume (vol-%), based upon total article volume. The porosity is desirably less than 3 vol-% and preferably less than 1 vol-%. As used herein, the term "substantially fully dense" means either a density of 99 % or more of theoretical density or a porosity of less than 1 vol-%. The material of the invention is particularly useful for the fabrication of cutting tools and nozzles, such as waterjet cutting nozzles.

The following examples and comparative experiments illustrate the present invention and should not be construed, by implication or otherwise, as limiting its scope. All parts and percentages are by weight and all temperatures are in ° centigrade (°C) unless otherwise indicated. Examples of the present invention are designated by Arabic numerals whereas comparative examples are identified by capital letters.

### Example 1 - Preparation of Densified material Using Tungsten Carbide as AX and Titanium Nitride as BY

The starting powder was a mixture of 96.4 % tungsten carbide powder (average particle size of 0.8 µm) and 3.6 percent titanium nitride (average particle size of about 1.5 µm). The mixture was attrited, in the presence of heptane, for four hours with a 7 kilogram (kg) load of tungsten carbide-cobalt (WC-Co) balls. About 2-3 percent paraffin wax was added as a binder during the last thirty minutes of attritor mixing.

The resultant mixture was dried and screened through a 20 mesh (850 µm) screen. Greenware parts were made by cold-pressing the mixture which passed through the screen in steel tooling at 5,000 pounds per square inch (psi) (35 MPa). The cold-pressed parts were then cold isostatically pressed at 30,000 psi (210 MPa). The resultant parts were dewaxed under vacuum at 350°C. The greenware was then wrapped in graphite foil (GRAPHOIL® from Union Carbide), placed into a glass pocket fluid die, or isostatic die assembly, preheated in a nitrogen atmosphere to 1650°C at a rate of 10°C/minute, held at that temperature for 15 minutes, and then isostatically pressed at 120,000 psi (830 MPa) for 10 seconds. The pressing procedure is described in more detail in US-A-4,744,943 at column 5, line 34 through column 6, line 15 and column 9, line 51 through column 10, line 3; US-A-4,428,906 at column 4, line 61 through column 6, line 32; and US-A-4,656,002 at column 4, line 41 through column 5, line 6. The fluid die was cooled in air and the parts were recovered and sand blasted. The parts weighed 25 grams (g) and were cylindrical in shape having a diameter of 1.85 cm and a length of 1.19 cm.

Analytical work involved the use of metallography, light microscopy, analytical scanning electron microscopy (ASEM), electron probe analysis (EPA), analytical transmission electron microscopy (ATEM), and x-ray diffraction (XRD). Microstructures were observed under the SEM, ATEM, and light microscopes. Determination of the presence of a reaction phase made use of XRD. Composition of the reaction phase was determined by EPA and ATEM.

Volume fraction of phases was determined by stereology of BSE images, and grain counting in ATEM. The parts were also subjected to Vickers Hot Hardness testing in accordance with the procedure described by B. North in Engineering Applications of Brittle Materials, page 159 (1985). The testing used a one kg load and a ten second indent time at various temperatures.

Physical properties of recovered parts were as follows: a) density - 14.54 g/cm³ (99.7 percent of theoretical); b) Hardness, Rockwell A - 95.6; c) Vickers hardness - 2602 kg/mm²; and d) Palmqvist toughness - 23.9 kg/mm. The recovered parts had a hot hardness, measured as in Example 1, of 10.74 GPa at 1200°C.

### Examples 2-4 - Preparation of Densified material Using Tungsten Carbide as AX and Titanium Nitride as BY

The process of Example 1 was, save for using a smaller attritor with a 3.5 kg load of WC/Co balls, increasing the preheat temperature to 1800°C and the time at pressure to 30 seconds and varying the pressure and time at pressure as shown in Table I, replicated for Examples 2-4. The density, Hardness, Rockwell A, Porosity (ASTM B-276-79) and Vickers hardness are also shown in Table I.

**Table I**

| Physical Properties of Examples 2-4 | | | | | | |
|---|---|---|---|---|---|---|
| Example No. | Pressure (MPa) | Density (g/cm³) | Density % Theoretical | Hardness Rockwell A | Vickers Hardness (kg/mm²) | Porosity |
| 2 | 828 | 14.66 | 100.6 | 95.1 | 2450 | A04 |
| 3 | 414 | 14.69 | 100.8 | 95.0 | 2374 | A04 |
| 4 | 207 | 14.69 | 100.8 | 94.9 | 2393 | A06, B04 |

### Examples 5-6 - Preparation of Densified Material Using Tungsten Carbide as AX and Tantalum Nitride as BY

The process of Example 1 was, save for changing the composition to a mixture of 89.6 percent of the same tungsten carbide as in Example 1 and 10.4 percent tantalum nitride (average particle size of about 1 µm) and varying the preheat temperature as shown in Table II, replicated for Examples 5 and 6. The density, Hardness, Rockwell A and Vickers hardness are also shown in Table II.

**Table II**

| Physical Properties of Examples 5-6 | | | | | |
|---|---|---|---|---|---|
| Example No. | Preheat Temperature (°C) | Density (g/cm³) | Density % Theoretical | Hardness Rockwell A | Vickers Hardness (kg/mm²) |
| 5 | 1650 | 15.70 | 100 | 95.1 | 2425 |
| 6 | 1800 | 15.74 | 100.3 | 94.6 | 2270 |

Similar results are expected with titanium nitride and tantalum nitride contents ranging from 1 to 50 percent, preheat temperatures of 1400°C to 2000°C and variations in time at pressure as well as pressure level. Similar results are also expected with other combinations of materials such as hafnium carbide with titanium nitride, zirconium nitride or tantalum nitride and tungsten carbide with zirconium nitride.

The materials of the present invention are, as noted hereinabove, useful in a wide variety of end use applications where wear resistance or hardness or both are needed. The materials are particularly useful in nozzles, such as sand blast nozzles and waterjet cutting nozzles, wear guides, bushings, powder compacting dies, valve parts, router bits, cutting tools, end mills, indexable inserts, and wire drawing die parts.

## Claims

1. A material suitable for use in fabricating articles of manufacture requiring high degrees of hardness or wear resistance that comprises a substantially fully dense, complex, multi-phase, fine grained product of an incomplete reaction among components of a powdered admixture of AX, an optional amount of X and at least one other reactant BY, AX and the other reactant(s) each having a melting point, the incomplete reaction taking place under pressure and at an elevated temperature that is less than three fourths of the lowest of the melting points of AX and the other reactant(s) said product having minimal grain growth and containing at least one compound AX and at least one compound that is a product of varying stoichiometry selected from (A,B)XY, (A,B)X and (A,B)Y, wherein A and B are different elements selected from titanium, vanadium, niobium, tantalum, chromium, molybdenum and tungsten, and X and Y are different elements selected from boron, carbon, silicon and nitrogen, provided (i) that titanium is not present as titanium carbonitride and (ii) no cobalt, iron or nickel is present other than any trace amounts from attritor or milling media.

2. A material as claimed in Claim 1 wherein there are no metals present other than A and B and any trace amounts from attritor or milling media.

3. A material as claimed in Claim 2 consisting of A, B, X and Y and any trace amounts from attritor or milling media.

4. A material as claimed in any one of the preceding claims containing no cobalt.

5. A material as claimed in any one of the preceding claims wherein A is tungsten or titanium, B is titanium or tantalum, X is carbon and Y is nitrogen.

6. A material as claimed in Claim 5 wherein AX is tungsten carbide and BY is titanium nitride or tantalum nitride.

7. A material as claimed in Claim 5 wherein the reaction product also contains a residual amount of unreacted BY.

8. A material as claimed in Claim 5 or Claim 7 wherein BY is present in an amount of from 1 to 50 percent by weight based upon total weight of AX and BY.

9. A material as claimed in Claim 8 having a hardness at 1200°C of greater than 5 gigapascals.

10. A material as claimed in Claim 1 having a Vickers hardness of at least 2000 kg/mm² measured using a 1 kg load, and an abrasion wear resistance (ASTM G65) of at least 400 cm⁻³.

11. A method of preparing a material suitable for use in fabricating articles of manufacture requiring high degrees of hardness or wear resistance that comprises subjecting a powdered admixture of AX, an optional amount of X and at least one other reactant BY, AX and the other reactant(s) each having a melting point, to a temperature that is less than three fourths of the lowest of the melting points of AX and the other reactant(s) and a pressure sufficient to produce a substantially fully dense, consolidated product of an incomplete reaction between AX, the other reactant(s) and, optionally, X, said product having minimal grain growth and comprising at least one compound AX and at least one compound that is a product of varying stoichiometry selected from (A,B)XY, (A,B)X and (A,B)Y, wherein A and B are different elements selected from titanium, vanadium, niobium, tantalum, chromium, molybdenum and tungsten, and X and Y are different materials selected from boron, carbon, silicon and nitrogen, provided (i) that titanium is not present as titanium carbonitride and (ii) no cobalt, iron or nickel is present other than any trace amounts from attritor or milling media.

12. A method as claimed in Claim 11 wherein the reactants are as defined in any one of Claims 2 to 8.

13. A wear resistant article fabricated from the material of any one of Claims 1 to 10.

## Patentansprüche

1. Material, das zur Verwendung bei der Herstellung von Gegenständen geeignet ist, die hohe Härte- oder Verschleißfestigkeitsgrade erfordern, umfassend ein im wesentlichen vollständig dichtes, komplexes, mehrphasiges, feinkörniges Produkt einer unvollständigen Reaktion zwischen Komponenten eines pulverförmigen Gemisches von AX und gegebenenfalls einer Menge von X und mindestens einem anderen Reaktanten BY, wobei AX und der/die anderen Reaktant(en) jeweils einen Schmelzpunkt haben, die unvollständige Reaktion unter Druck und bei einer erhöhten Temperatur stattfindet, die weniger als dreiviertel des niedrigsten der Schmelzpunkte von AX und dem/den anderen Reaktanten ist, wobei das Produkt minimales Kornwachstum aufweist und mindestens eine Verbindung AX und mindestens eine Verbindung enthält, die ein Produkt mit variierender Stöchiometrie ist, ausgewählt aus (A,B)XY, (A,B)X und (A,B)Y, worin A und B verschiedene Elemente sind, ausgewählt aus Titan, Vanadium, Niob, Tantal, Chrom, Molybdän und Wolfram und X und Y verschiedene Elemente sind, ausgewählt aus Bor, Kohlenstoff, Silicium und Stickstoff, mit der Maßgabe, daß (i) Titan nicht als Titancarbonitrid vorliegt und (ii) kein Kobalt, Eisen oder Nickel, außer Spurenmengen aus dem Attritor oder Mahlmedium, vorliegt.

2. Material nach Anspruch 1, worin keine anderen Metalle vorliegen, die von A und B und Spurenmengen aus dem Attritor oder Mahlmedium verschieden sind.

3. Material nach Anspruch 2, das aus A, B, X und Y und Spurenmengen aus dem Attritor oder Mahlmedium besteht.

4. Material nach einem der vorhergehenden Ansprüche, das kein Kobalt enthält.

5. Material nach einem der vorhergehenden Ansprüche, worin A Wolfram oder Titan, B Titan oder Tantal, X Kohlenstoff und Y Stickstoff ist.

6. Material nach Anspruch 5, worin AX Wolframcarbid und BY Titannitrid oder Tantalnitrid ist.

7. Material nach Anspruch 5, worin das Reaktionsprodukt auch eine Restmenge nicht umgesetztes BY enthält.

8. Material nach Anspruch 5 oder 7, worin BY in einer Menge von 1 bis 50 % bezüglich des Gewichts, basierend auf dem Gesamtgewicht von AX und BY, vorliegt.

9. Material nach Anspruch 8, mit einer Härte von größer als 5 Gigapascal bei 1200 °C.

10. Material nach Anspruch 1, mit einer Vickershärte von mindestens 2000 kg/mm², gemessen unter Verwendung einer 1 kg Belastung, und einer Abriebsverschleißfestigkeit (ASTM G65) von mindestens 400 cm⁻³.

11. Verfahren zur Herstellung eines Materials, das zur Verwendung bei der Herstellung von Gegenständen geeignet ist, die hohe Härte- oder Verschleißfestigkeitsgrade erfordern, umfassend das Aussetzen eines pulverförmigen Gemisches von AX, gegebenenfalls einer Menge von X und mindestens einem anderen Reaktanten BY, wobei AX und der/die anderen Reaktant(en) jeweils einen Schmelzpunkt haben, einer Temperatur, die weniger als dreiviertel des niedrigsten der Schmelzpunkte von AX und dem/den anderen Reaktanten ist und einem Druck, der ausreichend ist, um ein im wesentliches vollständig dichtes, verfestigtes Produkt einer unvollständigen Reaktion zwischen AX, dem/den anderen Reaktanten und, gegebenenfalls, X zu erzeugen, wobei das Produkt minimales Kornwachstum aufweist und mindestens eine Verbindung AX und mindestens eine Verbindung enthält, die ein Produkt mit variierender Stöchiometrie ist, ausgewählt aus (A,B)XY, (A,B)X und (A,B)Y, worin A und B verschiedene Elemente sind, ausgewählt aus Titan, Vanadium, Niob, Tantal, Chrom, Molybdän und Wolfram und X und Y verschiedene Materialien sind, ausgewählt aus Bor, Kohlenstoff, Silicium und Stickstoff, mit der Maßgabe, daß (i) Titan nicht als Titancarbonitrid vorliegt und (ii) kein Kobalt, Eisen oder Nickel, außer Spurenmengen aus dem Attritor oder Mahlmedium, vorliegt.

12. Verfahren nach Anspruch 11, worin die Reaktanten wie in einem der Ansprüche 2 bis 8 definiert sind.

13. Verschleißfester Gegenstand, der aus dem Material nach einem der Ansprüche 1 bis 10 hergestellt ist.

## Revendications

1. Matière adaptée à une utilisation dans la fabrication d'articles manufacturés nécessitant des degrés élevés de dureté ou de résistance à l'usure, qui comprend un produit à grains fins, essentiellement complètement dense, complexe, multiphase obtenu par réaction incomplète des composants d'un mélange pulvérulent de AX, d'une quantité facultative de X et d'au moins un autre réactif BY, AX et le ou les autres réactifs possédant chacun un point de fusion, la réaction incomplète ayant lieu sous pression et à une température élevée qui est inférieure aux trois quarts du point de fusion le plus bas parmi les points de fusion de AX et de l' (ou des) autre(s) réactif(s), ledit produit possédant une croissance de grains minimale et contenant au moins un composé AX et au moins un composé qui est un produit de stoechiométrie variable choisi parmi (A,B)XY, (A,B)X et (A,B)Y, dans lesquels A et B sont des éléments différents choisis parmi le titane, le vanadium, le niobium, le tantale, le chrome, le molybdène et le tungstène, et X et Y sont des éléments différents choisis parmi le bore, le carbone, le silicium et l'azote, à condition (i) que le titane ne soit pas présent sous forme de carbonitrure de titane et (ii) aucun cobalt, fer ou nickel ne soient présents autrement qu'à l'état de traces provenant des milieux d'attrition ou de broyage.

2. Matière selon la revendication 1, dans laquelle il n'existe aucun métal présent autre que A et B et de traces provenant des milieux d'attrition ou de broyage.

3. Matière selon la revendication 2 constituée de A, B, X et Y et de quantités infimes provenant de milieux d'attrition ou de broyage.

4. Matière selon l'une des revendications précédentes ne contenant pas de cobalt.

5. Matière selon l'une des revendications précédentes, dans laquelle A est le tungstène ou le titane, B est le titane ou le tantale, X est le carbone et Y est l'azote.

6. Matière selon la revendication 5, dans laquelle AX est le carbure de tungstène et BY est le nitrure de titane ou le nitrure de tantale.

7. Matière selon la revendication 5, dans laquelle le produit de réaction contient également une quantité résiduelle de BY n'ayant pas réagi.

8. Matière selon l'une des revendications 5 ou 7, dans laquelle BY est présent en quantité comprise entre 1 et 50% en poids par rapport au poids total de AX et de BY.

9. Matière selon la revendication 8, possédant une dureté à 1200°C supérieure à 5 gigapascals.

10. Matière selon la revendication 1, possédant une dureté Vickers d'au moins 2000 kg/mm², mesurée en utilisant une charge de 1 kg, et une résistance à l'usure par abrasion (ASTM G65) d'au moins 400 cm⁻³.

11. Procédé de préparation d'une matière adaptée à une utilisation dans la fabrication d'articles manufacturés demandant des degrés élevés de dureté ou de résistance à l'usure, qui consiste à soumettre un mélange pulvérulent de AX, d'une quantité facultative de X et d'au moins un autre réactif BY, AX et l' (ou les) autre(s) réactif(s) possédant chacun un point de fusion, à une température qui est inférieure aux trois quarts du point de fusion le plus bas parmi les points de fusion de AX et de 1' (ou des) autre(s) réactif(s) et à une pression suffisante pour produire un produit consolidé essentiellement complètement dense par réaction incomplète entre AX, 1' (ou les) autre(s) réactif(s) et, éventuellement, X, ledit produit possédant une croissance de grains minimale et comprenant au moins un composé AX et au moins un composé qui est un produit à stoechiométrie variable choisi parmi (A,B)XY, (A,B)X et (A,B)Y, dans lesquels A et B sont des éléments différents choisis parmi le titane, le vanadium, le niobium, le tantale, le chrome, le molybdène et le tungstène, et X et Y sont des matières différentes choisies parmi le bore, le carbone, le silicium et l'azote, à condition (i) que le titane ne soit pas présent sous forme de carbonitrure de titane et (ii) aucun cobalt, fer ou nickel ne soient présents autrement qu'à l'état de traces provenant des milieux d'attrition ou de broyage.

12. Procédé selon la revendication 11, dans lequel les réactifs sont tels que définis dans l'une des revendications 2 à 8.

13. Article résistant à l'usure fabriqué à partir de la matière selon l'une des revendications 1 à 10.
